Europäisches Patentamt

European Patent Office

Office européen des brevets

(11) Veröffentlichungsnummer: **0 058 749**
A1

(12) **EUROPÄISCHE PATENTANMELDUNG**

(21) Anmeldenummer: 81108325.2

(22) Anmeldetag: 14.10.81

(51) Int. Cl.³: **H 04 Q 11/04, H 04 M 11/06**

(30) Priorität: 20.02.81 DE 3106388

(43) Veröffentlichungstag der Anmeldung: 01.09.82
Patentblatt 82/35

(84) Benannte Vertragsstaaten: **AT BE CH FR GB IT LI NL SE**

(71) Anmelder: SIEMENS AKTIENGESELLSCHAFT Berlin
und München, Postfach 22 02 61,
D-8000 München 22 (DE)

(72) Erfinder: Gerke, Peter, Dipl.-Ing.,
Rudolf-Diesel-Strasse 20, D-8032 Gräfelfing (DE)

(54) Digital-Vermittlungseinrichtung.

(57) In einer 64-kbit/s-Einheitskanal-Koppelanordnung (K), über die auch 8-kbit/s-Subkanäle jeweils nach Aufpolsterung zu einem Pseudo-Einheitskanal vermittelbar sind, sind Subkanal-Anschlußleitungen (S1...Sn), die jeweils in einer Mehrzahl mit einer gemeinsamen Gegenstelle (G) zu verbinden sind, mit einem Subkanal-Multiplexer-/Demultiplexer-Operationsmodul (P1, Pn, Muldex) verbindbar, dessen Multiplex-Ausgang/-Eingang (m) wiederum über die Koppelanordnung (K) mit einer zu der gemeinsamen Gegenstelle (G) führenden Einheitskanal-Fernmeldeleitung (Vg) verbindbar ist.

SIEMENS AKTIENGESELLSCHAFT      Unser Zeichen
BERLIN und MÜNCHEN              VPA    81 P 5 9 0 1 E


Digital-Vermittlungseinrichtung

Neuere Entwicklungen der Fernmeldetechnik führen zu Digital-Fernmeldesystemen, die für Fernsprechteilnehmer eine Wandlung der Sprach-Analogsignale in Digitalsignale (und umgekehrt) bereits in der Teilnehmerstelle vorsehen und in denen über Digital-Vermittlungseinrichtungen Digital-Fernsprechverbindungen in einheitlichen Kommunikationskanälen mit einer Bitrate von beispielsweise 64 kbit/s (je Übertragungsrichtung) aufbaubar sind; dabei ist ein solches Digital-Fernmeldesystem grundsätzlich offen für eine Integration auch anderer Kommunikationsdienste wie beispielsweise Text- und/oder Datenübertragung oder Signalisierung in gesonderten Teilnehmerkanälen (ISS'79, 773 ... 780; telcom report 2(1979) 4, 254...261). Solche anderen Kommunikationsdienste, wie beispielsweise eine Datenübertragung bis zu 8-kbit/s, nutzen in der Regel die (64-kbit/s-)-Bitrate eines Kommunikations-Einheitskanals nicht aus; sie belegen vielmehr einen im folgenden auch als Subkanal bezeichneten Kommunikationskanal entsprechend kleinerer Bitrate.

Um solche Subkanäle über die Koppelanordnung einer für eine Vermittlung von 64-kbit/s-Einheitskanälen ausgelegte Digital-Vermittlungseinrichtung führen zu können, gibt es verschiedene Möglichkeiten:
Mehrere Kanäle kleiner Bitrate werden beim Ursprungsteilnehmer zu einem 64-kbit/s-Kanal zusammengefaßt und beim Zielteilnehmer wieder in einzelne Kanäle aufgelöst - was gleichen Ursprung und gleiches Ziel für diese Kanäle kleinerer Bitrate zur Voraussetzung hat (ISS'79, 773, 776; telcom report 2 (1979)4, 254,257).
Spr 1 Bo / 19.2.1981

Kanäle kleiner Bitrate werden nach einem zu standardisierenden Verfahren auf 64 kbit/s "aufgepolstert", belegen also einen 64-kbits/s-Kanal voll - was den Vorteil hat, daß die Kanäle damit individuell über 64-kbit/s-Koppelanordnungen vermittelt werden können (ISS'79, 773, 776; telcom report 2 (1979)4, 254, 258).

An die 64-kbit/s-Koppelanordnung der Vermittlungseinrichtung werden sogenannte Operationsmodule angeschlossen, die, gewissermaßen als eigene Vermittlungseinrichtung für Subkanäle, ein Vermitteln von Kanälen mit kleinerer Übertragungsgeschwindigkeit als 64-kbit/s übernehmen (ISS'79, 773, 779; telcom report 2 (1979)4, 254, 260).

Vielfach ist es nun so, daß über eine Mehrzahl solcher Subkanäle eine Mehrzahl von Endgeräten des betreffenden Kommunikationsdienstes mit ein und derselben Gegenstelle (und umgekehrt) zu verbinden ist. So kann beispielsweise eine Mehrzahl von Telexstellen über eine 64-kbits/s-Fernsprech-Vermittlungsstelle mit einer zentralen Telex- und Daten-Vermittlungsstelle zu verbinden sein, wobei solche Verbindungen auch zu über die zentrale Stelle verlaufenden Punkt-Punkt-Verbindungen zwischen Endgeräten zweier Vermittlungen gehören können, oder es kann beispielsweise eine Mehrzahl von Datenterminals mit einer zentralen Datenverarbeitungsanlage zu verbinden sein. Die Erfindung zeigt nun einen Weg, solchen Fernmeldenetzkonfigurationen in zweckmäßiger, aufwandsparender Weise Rechnung zu tragen.

Die Erfindung betrifft eine Digital-Vermittlungseinrichtung, über deren Koppelanordnung Digitalsignale einheit-

0058749

licher Bitrate führende Fernmelde-Einheitskanäle, insbesondere 64-kbit/s-Fernsprechkanäle, vermittelbar sind, wobei über die Koppelanordnung auch Digitalsignale kleinerer Bitrate führende Fernmelde-Subkanäle, insbesondere Text-/Datenkanäle, jeweils nach subkanalindividueller Aufpolsterung zu einem (Pseudo-)Einheitskanal kanalindividuell vermittelbar sind; diese Digital-Vermittlungseinrichtung ist erfindungsgemäß dadurch gekennzeichnet, daß von den leitungsindividuell an Eingänge/Ausgänge der Koppelanordnung angeschlossenen Subkanalanschlußleitungen jeweils eine Mehrzahl solcher gleichzeitig mit einer gemeinsamen Gegenstelle zu verbindender Subkanalanschlußleitungen kanalindividuell mit den einzelnen, jeweils über eine Ab-/Aufpolsterungsschaltung an Ausgänge/Eingänge der Koppelanordnung angeschlossenen Einzel-Eingängen/Ausgängen eines Multiplexer-Demultiplexer-Operationsmoduls verbindbar sind, dessen an einen Eingang/Ausgang der Koppelanordnung angeschlossener Multiplex-Ausgang/Eingang über die Koppelanordnung mit einer an einen Ausgang/Eingang der Koppelanordnung angeschlossenen und diese mit der gemeinsamen Gegenstelle verbindenden Einheitskanal-Fernmeldeleitung verbindbar ist.

Die Erfindung bringt den Vorteil mit sich, in aufwandsparender Weise über die Einheitskanal-Koppelanordnung eines auf (beispielsweise 64 kbit/s-)Einheitskanälen basierenden Digital-Fernmeldesystems auch Subkanäle kleinerer Bitrate zu/von einer gemeinsamen Gegenstelle individuell vermitteln zu können, und zwar ohne eine eigene Subkanal-Vermittlungseinrichtung und zugleich ohne subkanalindividuell zu belegende 64 kbit/s-Verbindungskanäle zwischen der Einheitskanal-Koppelanordnung und einer einer Mehrzahl von Subkanälen gemeinsamen Gegenstelle.

Anhand der Zeichnung sei die Erfindung noch näher erläutert. Dabei zeigt

FIG 1 ein Ausführungsbeispiel für eine Digital-Vermittlungseinrichtung gemäß der Erfindung;

FIG 2 zeigt eine darin verwendbare Ab-/Aufpolsterungsschaltung.

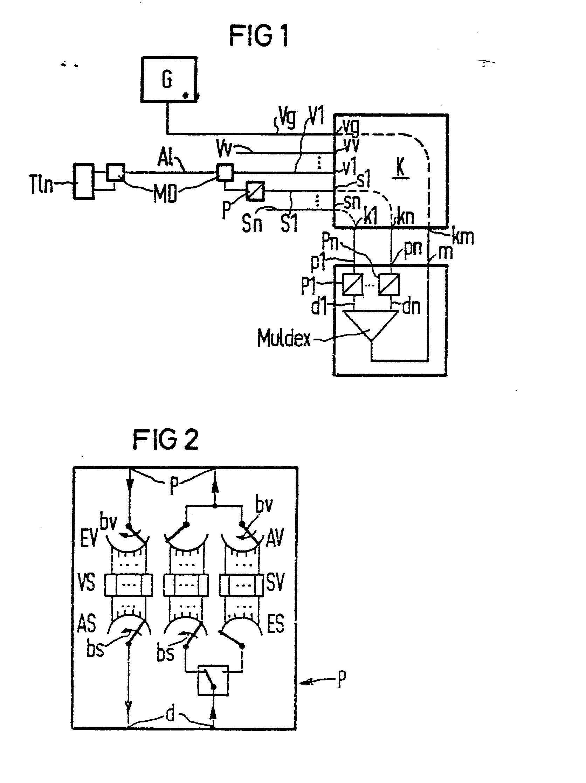

In der Zeichnung FIG 1 ist schematisch in einem zum Verständnis der Erfindung erforderlichen Umfang eine Digital-Vermittlungseinrichtung mit einer Koppelanordnung K dargestellt, an die zugehörige Teilnehmerstellen, wie die Teilnehmerstelle Tln, jeweils über eine Teilnehmeranschlußleitung, im Beispiel die Teilnehmeranschlußleitung A1, und eine zugehörige Eingangs-/Ausgangsleitung (V1) angeschlossen sein mögen. Bei der über die Teilnehmeranschlußleitung A1 - V1 an den Eingang/Ausgang v1 der Koppelanordnung K angeschlossenen Teilnehmerstelle Tln möge es sich beispielsweise um eine Digital-Fernsprech-Teilnehmerstelle handeln, die (je Übertragungsrichtung) in einem über die Teilnehmeranschlußleitung verlaufenden Fernmelde-Einheitskanal einer einheitlichen Bitrate von beispielsweise 64 kbit/s über die solche 64-kbit/s-Einheitskanäle vermittelnde Koppelanordnung K am Digital-Fernsprechverkehr teilzunehmen vermag. Wie in FIG 1 angedeutet ist, können in entsprechender Weise weitere 64-kbit/s-Teilnehmeranschlußleitungen, wie z.B. die Leitung Vv, an weitere Eingänge/Ausgänge der Koppelanordnung K, im Beispiel an deren Eingang/Ausgang vv, angeschlossen sein.

Der Teilnehmerstelle Tln möge zusätzlich zu einem 64-kbit/s-Fernsprechen noch ein weiterer Kommunikationsdienst, wie beispielsweise Text- und/oder Datenübermittlung zugänglich sein, der lediglich einen Subkanal kleinerer Bitrate (z.B. 8 kbit/s) belegt. In FIG 1 ist hierzu angedeutet, daß ein solcher Subkanal mit Hilfe von Multiplexern/Demultiplexern MD zwischen der Teilnehmerstelle Tln und der die Koppelanordnung K enthaltenden Digital-Vermittlungseinrichtung im Multiplex mit dem 64-kbit/s-Fernsprech-Einheitskanal ebenfalls über die Teilnehmeranschlußleitung Al geführt sein kann; in der Digital-Vermittlungseinrichtung wird der Subkanal indessen getrennt von dem über die Teilnehmer-Eingangs-/Ausgangsleitung V1 geführten Einheitskanal über eine eigene Eingangs-/Ausgangsleitung S1 geführt, die an einen eigenen Eingang/Ausgang s1 der Koppelanordnung K angeschlossen ist. Dabei ist in die Eingangs-/Ausgangsleitung S1 eine Auf-/Abpolsterungsschaltung P eingefügt, die den (8-kbit/s-)Subkanal in einen dann ohne weiteres über die Koppelanordnung K vermittelbaren (64-kbit/s-)Pseudo-Einheitskanal (bzw. umgekehrt) überführt.

Eine solche Ab-/Aufpolsterungsschaltung kann im Prinzip, wie dies auch die - im Unterschied zu der in einadriger Darstellung gehaltenen FIG 1 eine zweiadrige Darstellung gebende - FIG 2 verdeutlicht, zwei Serien-Parallel-Serien-Umsetzerschaltungen aufweisen, in deren einer ( in der einen Übertragungsrichtung) die im Subkanal (d in FIG 2) ankommenden Daten mit der Subkanal-Bitrate bs von im Beispiel 8 kbit/s von einer Einschreibeinrichtung ES in eine Speichereinrichtung SV eingeschrieben werden, um daraus anschließend von einer Ausleseeinrichtung AV mit der Einheitskanal-Bitrate bv von im Beispiel 64 kbit/s (mehrfach) wiederholt ausgelesen und im (Pseudo-)Einheitskanal (p in FIG 2) weiter übertragen zu werden; in der anderen Serien-Parallel-Serien-Umsetzerschaltung werden (in der anderen Übertragungsrichtung) die im Einheitskanal (p in FIG 2) ankommenden Daten von einer Einschreibeinrichtung EV mit der Einheitskanal-Bitrate bv in eine Speichereinrichtung VS eingeschrieben, die danach von einer Ausleseeinrichtung AS mit der Subkanal-Bitrate bs ausgelesen wird. Dabei kann, wie dies auch in FIG 2 angedeutet ist, die "aufpolsternde" Serien-Parallel-Serien-Umsetzerschaltung ES - SV - AV ihrerseits aus zwei gleichen Serien-Parallel-Serien-Umsetzern bestehen, von denen jeweils der eine gerade ausgelesen wird, während in den anderen gerade eingeschrieben wird (und umgekehrt).

Um nun wieder auf FIG 1 zurückzukommen, so können in der dort dargestellten Digital-Vermittlungseinrichtung auch weitere Pseudo-Einheitskanal-Leitungen, wie die Eingangs-/Ausgangsleitung Sn, an Eingänge/Ausgänge (sn) der Koppelanordnung K angeschlossen sein, wobei, ohne daß dies in FIG 1 näher dargestellt ist, solche Eingangs-/Ausgangsleitungen auch über eine eigene Anschlußleitung mit einer entsprechenden Teilnehmerstelle verbunden sein können.

Wie eingangs erwähnt, kann gegebenenfalls eine Mehrzahl von an Subkanal-Kommunikationsdiensten teilnehmenden Teilnehmerstellen mit ein und derselben Gegenstelle (und umgekehrt) zu verbinden sein, d.h. es kann in der Digital-Vermittlungseinrichtung nach FIG 1 eine Mehrzahl von mit solchen Subkanälen entsprechenden Pseudo-Einheitskanälen belegten Eingangs-/Ausgangsleitungen S1...Sn über die Einheitskanal-Koppelanordnung K mit der gemeinsamen Gegenstelle, z.B. auch Vermittlungsstelle, zu verbinden sein.

Hierzu sind nun an Ausgänge/Eingänge k1...kn der Koppelanordnung K jeweils über eine Ab-/Aufpolsterungsschaltung P1...Pn die Eingänge/Ausgänge d1...dn eines Subkanal-Multiplexers/-Demultiplexers Muldex angeschlossen, dessen Multiplex-Ausgang-/Eingang m an einen weiteren Eingang/Ausgang km der Koppelanordnung angeschlossen ist; außerdem ist an die Koppelanordnung K die genannte gemeinsame Gegenstelle G über eine (64 kbit/s-)Einheitskanal-Fernmeldeleitung Vg angeschlossen. Über die Koppelanordnung K sind dann die gleichzeitig mit der gemeinsamen Gegenstelle G zu verbindenden Subkanal-Anschlußleitungen bzw. die zugehörigen, mit den entsprechenden Pseudo-Einheitskanälen belegten Eingangs-/Ausgangsleitungen S1...Sn kanalindividuell mit den einzelnen Ausgängen/Eingängen k1...kn der Koppelanordnung K und weiter jeweils über eine Ab-/Aufpolsterungsschaltung P1...Pn mit den einzelnen Eingängen/Ausgängen d1...dn des Subkanal-Multiplexers/-Demultiplexers Muldex verbindbar, dessen Multiplex-Ausgang/-Eingang m seinerseits über die Koppelanordnung K mit der diese mit der gemeinsamen Gegenstelle G verbindenden Einheitskanal-Fernmeldeleitung Vg verbindbar ist. Dabei findet jeweils dezentral eine Aufpolsterung/Abpolsterung zwischen (leitungsindividuell geführtem) Subkanal und (über die Einheitskanal-Koppelanordnung K vermittelbarem) Pseudo-Einheitskanal und zentral eine Abpolsterung/Aufpolsterung zwischen Pseudo-Einheitskanal und (im Multiplex mit weiteren solchen Subkanälen zusammengefaßtem) Subkanal statt.

In FIG 1 ist diese Verbindbarkeit von Subkanal-Anschlußleitungen und gemeinsamer Gegenstelle in der Koppelanordnung K durch eine gestrichelte Linienführung angedeutet; weitere schaltungstechnische Einzelheiten der Digital-Vermittlungseinrichtung und ihrer Koppelanordnung brauchen hier nicht betrachtet zu werden, da dies zum Verständnis nicht mehr erforderlich ist.

Patentanspruch

Digital-Vermittlungseinrichtung, über deren Koppelanordnung Digitalsignale einheitlicher Bitrate führende
Fernmelde-Einheitskanäle, insbesondere 64-kbit/s-Fernsprechkanäle, vermittelbar sind, wobei über die Koppelanordnung auch Digitalsignale kleinerer Bitrate führende Fernmelde-Subkanäle, insbesondere Text-/Datenkanäle,
jeweils nach subkanalindividueller Aufpolsterung zu
einem (Pseudo-) Einheitskanal kanalindividuell vermittelbar sind,  d a d u r c h   g e k e n n -
z e i c h n e t  , daß von leitungsindividuell an
Eingänge/Ausgänge (s1...sn) der Koppelanordnung (K)
angeschlossenen Subkanalanschlußleitungen (S1...Sn) jeweils eine Mehrzahl solcher gleichzeitig mit einer gemeinsamen Gegenstelle (G) zu verbindender Subkanalanschlußleitungen (S1...Sn) kanalindividuell mit den
einzelnen jeweils über eine Ab-/Aufpolsterungsschaltung (P1...Pn) an Ausgänge/Eingänge (k1...kn) der Koppelanordnung (K) angeschlossenen Eingängen/Ausgängen
(d1...dn) eines Subkanal-Multiplexer-/Demultiplexer-
Operationsmoduls (Muldex) verbindbar sind, dessen an
einen Eingang/Ausgang (km) der Koppelanordnung (K) angeschlossener Multiplex-Ausgang/Eingang (m) über die
Koppelanordnung (K) mit einer an einen Ausgang/Eingang
(vg) der Koppelanordnung (K) angeschlossenen und diese
mit der gemeinsamen Gegenstelle (G) verbindenden Einheitskanal-Fernmeldeleitung (Vg) verbindbar ist.

FIG 1

FIG 2